# FASCICULE DE BREVET EUROPEEN

(11) **EP 1 902 002 B1**
(45) Date de publication et mention de la délivrance du brevet: **21.03.2012**
(21) Numéro de dépôt: 06778976.8
(22) Date de dépôt: 27.06.2006
(51) Int. Cl.: C03C 25/26, C03C 25/32, C09D 5/18, C09D 7/12

(54) **FILS DE RENFORCEMENT ET COMPOSITES AYANT UNE TENUE AU FEU AMELIOREE**
VERSTÄRKUNG VON GARNEN UND VERBUNDWERKSTOFFEN MIT VERBESSERTER FEUERBESTÄNDIGKEIT
REINFORCING YARNS AND COMPOSITES WITH AN IMPROVED FIRE-RESISTANCE

(30) Priorité: 06.07.2005 FR 0552072
(43) Date de publication de la demande: 26.03.2008
(73) Titulaire: Saint-Gobain Vetrotex France, 73000 Chambéry (FR)
(72) Inventeur: GASCA, Jean-Philippe, F-73250 St-Jean de la Porte (FR); CHIVAS, Carine, F-60550 Verneuil-en-Halatte (FR); BERGERET, Anne, F-30100 Ales (FR); LOPEZ-CUESTA, José-Marie, F-30380 Saint Christophe les Ales (FR)
(74) Mandataire: Joly, Jean-Jacques
(86) Numéro de dépôt international: PCT/FR2006/050632
(87) Numéro de publication internationale: WO 2007/006989

(56) Documents cités:
- EP-A- 0 044 614
- EP-A- 0 104 555
- EP-A- 0 856 494
- EP-A1- 0 384 940
- EP-A1- 1 607 451
- EP-A1- 1 734 020
- WO-A-93/06055
- WO-A1-01/66494
- WO-A1-97/21636
- WO-A1-2006/039753
- WO-A1-2006/067478
- WO-A1-2006/067488
- WO-A2-2005/007759
- WO-A2-2006/103375
- WO-A2-2006/103377
- DE-A1- 19 857 697
- FR-A- 2 588 255
- FR-A1- 2 806 402
- JP-A- 52 073 597
- JP-A- 61 236 851
- US-A- 4 174 223
- US-A- 6 045 726
- US-A1- 2003 170 317
- DATABASE WPI Week 197731, Derwent Publications Ltd., London, GB; AN 1977-54780Y & JP 52 073597 A (FURUKAWA ELECTRIC CO LTD) 20 Juin 1977
- DATABASE WPI Week 200164, Derwent Publications Ltd., London, GB; AN 2001-570763 & WO 01 66494 A1 (NIPPON KAYAKU KK) 13 Septembre 2001
- DATABASE WPI Week 198649, Derwent Publications Ltd., London, GB; AN 1986-321540 & JP 61 236851 A (ASAHI CHEM IND CO LTD) 22 Octobre 1986

## Description

La présente invention concerne des fils (ou fibres) aptes à renforcer des matières organiques et/ou inorganiques, ainsi que les produits renforcés (ou composites) obtenus, ces fils de renforcement et ces composites ayant une tenue au feu améliorée. La présente invention concerne également la composition utilisée pour revêtir ces fils et le procédé de fabrication de ces fils.

La présente invention s'intéresse en particulier aux fils de verre de renforcement, susceptibles d'être obtenus par étirage mécanique à grande vitesse (jusqu'à quelques dizaines de mètres par seconde) de filets de verre fondu s'écoulant d'orifices disposés à la base de filière(s). Ces filets sont étirés sous forme de filaments, lesquels sont revêtus, avant leur rassemblement en fils, d'une composition, dite d'ensimage, destinée notamment à protéger les fils de l'abrasion, à permettre l'association des fils avec la matrice (matière(s) organiques et/ou matière(s) inorganique(s)) à renforcer, etc.

Si les fils de verre possèdent de remarquables propriétés que l'on retrouve dans les produits composites réalisés, ils ont en revanche un effet négatif en ce qui concerne la tenue au feu de ces composites en facilitant le cas échéant la propagation du feu au sein desdits composites. Les agents ignifugeants classiques insérés dans la matrice ne permettent pas véritablement de supprimer cet effet car les valeurs de résistance au feu atteintes dans ce cas restent insuffisantes, en particulier inférieures au niveau atteint en l'absence de fils de renfort.

La présente invention a cherché à résoudre ce problème et a découvert que l'ajout à la composition d'ensimage d'un composant qui n'est pas forcément en lui-même un agent ignifugeant reconnu mais qui agit à l'interface matrice/fils au sein des composites réalisés, repoussant ainsi l'inflammation ou accélérant l'auto-extinction, améliore la résistance au feu du composite sans par ailleurs nuire à ses propriétés (notamment mécaniques) ou à la mise en oeuvre des fils de renfort.

La présente invention a donc d'abord pour objet Les fils de renfort, revêtus par une composition d'ensimage caractérisée en ce qu'elle comprend au moins un additif apte à agir à (ou à modifier) l'interface matrice/fils de façon à améliorer la résistance au feu du composite matrice/fils de renfort, notamment en repoussant l'inflammation et/ou en accélérant l'auto-extinction, sans pour autant nuire aux propriétés mécaniques du composite ou à la mise en oeuvre des fils.

Le retard d'inflammation et/ou l'accélération de l'auto-extinction ont lieu par suite d'au moins un phénomène se produisant essentiellement à l'interface matrice/fils et conduisant préférentiellement à la diminution du transfert thermique à l'interface, notamment par formation d'une couche carbonée, l'additif étant par exemple un donneur de carbone ou agissant comme oxydant coupant les chaînes de la matrice à l'interface et favorisant la réticulation, ou interagissant avec un retardateur de flamme de la matrice, etc , sans que l'on puisse être lié par une quelconque théorie sur ces différents modes d'action possibles.

Le ou les additifs aptes à modifier l'interface matrice/fils de façon à améliorer la résistance au feu du composite matrice/fils (sans pour autant nuire aux propriétés mécaniques ou à la mise en oeuvre) peuvent être choisis notamment parmi :
- les nitrates, tels que le nitrate de potassium (KNO₃), ou le nitrate de guanidine ;
- un alcool choisi parmi le dipentaérythritol, le tripentaérythritol, le pentaérythritol éthoxylé, le pentaérythritol propoxylé, le pentaérythritol éthoxylé/propoxylé, ou le sorbitol (ou D-glucitol) ; et
- les dérivés du phosphore ou de l'acide phosphorique, les organophosphorés, les phosphates d'ester cyclique ou les organophosphinates, tels que le polyphosphate d'ammonium, le phosphate de guanidine, le 1,2,3 dioxaphosphorinane, ou le pyrophosphate d'ammonium,
ce(s) additif(s) étant préférentiellement choisi(s) parmi les nitrates tels que le nitrate de potassium (KNO₃) ou le nitrate de guanidine (le nitrate préféré étant le nitrate de potassium), et/ou parmi les alcools (et leurs dérivés) de type sorbitol ou dérivés du pentaérythritol, de préférence (notamment lorsque les fils de renfort sont destinés à être coupés) parmi le pentaérythritol éthoxylé, le pentaérythritol propoxylé, le pentaérythritol éthoxylé/propoxylé, et le sorbitol, et de façon particulièrement préférée parmi le pentaérythritol éthoxylé et le sorbitol.

Les additifs choisis selon l'invention ne font normalement pas partie des produits habituellement classés comme ignifugeants, et n'auraient par exemple aucun effet contre le feu s'ils étaient incorporés, en particulier seuls et au même taux, au sein même de la matrice plutôt que sur les fils. Comme indiqué précédemment, leur action s'exerce essentiellement à l'interface de la matrice et du fil (en particulier à l'interface ensimage/(fil et/ou matrice)), ce(s) composé(s) pouvant interagir le cas échéant, au niveau de ladite interface, avec la matrice et/ou le(s) retardateur(s) de flamme de la matrice et/ou avec d'autres composants de l'ensimage.

A noter que la composition selon l'invention est avantageusement exempte de phosphore rouge, d'oxyde d'antimoine et de composés halogénés, ces derniers étant par ailleurs nuisibles pour l'environnement.

De préférence, le(s) additif(s) apte(s) à modifier l'interface matrice/fils selon l'invention est(sont) soluble(s), dispersable(s) ou émulsionnable(s) dans l'eau et/ou dans (le reste de) la composition. La composition selon l'invention étant généralement une composition aqueuse, l'extrait sec de la composition est dans ce cas préférentiellement compris entre 1 et 20 % en poids de la composition (la composition comprenant entre 80 et 99 % en poids d'eau), notamment entre 2 et 10% en poids. Dans d'autres modes de réalisation, la composition selon l'invention peut être dénuée d'eau ou comprendre d'autres solvants.

Le taux d'additif(s) apte(s) à modifier l'interface matrice/fils selon l'invention est généralement compris entre 1 et 60%, et de préférence entre 2 et 40%, en poids de l'extrait sec de la composition.

La composition (préférentiellement d'ensimage) peut également contenir au moins un agent de couplage, permettant généralement de coupler les fils de renfort (en particulier de verre) à la matrice à renforcer. Cet agent de couplage peut être choisi notamment parmi les silanes, les titanates et les zirconates, et est préférentiellement choisi parmi les silanes (en particulier parmi les aminosilanes, les époxysilanes, etc). Le taux d'agent(s) de couplage est alors préférentiellement compris entre 1 et 50% en poids, avantageusement entre 2 et 20% en poids, et de façon particulièrement préférée entre 5 et 15% en poids de l'extrait sec de la composition.

La composition peut également contenir au moins un agent (filmogène) collant, cet agent agissant, généralement, sur l'aptitude à la mise en oeuvre du fil (raideur, cohésion inter filamentaire, etc.), cet agent étant par exemple choisi parmi les polyuréthannes, les résines époxyde, les copolymères acryliques, les polyacétates de vinyles et- les émulsions polyoléfiniques, le taux d'agent(s) collant(s) étant le cas échéant (lorsqu'il(s) est(sont) présent(s)) compris entre 10 à 90%, et de préférence entre 20 et 80%, en poids de l'extrait sec de la composition. De préférence, la composition comprend au moins un agent collant apte à fixer l'additif selon l'invention à la surface du fil pour qu'il reste à l'interface fil/matrice, cet agent étant avantageusement sous forme d'un polyuréthanne et étant choisi en particulier peu soluble dans la matrice ou ne diffusant pas (trop) à l'interface. Il peut s'agir par exemple d'un polyuréthanne destiné à être réticulé après dépôt de la composition sur le fil (par exemple lors d'une opération de séchage), ce polyuréthanne étant autoréticulant (en particulier comprenant des fonctions susceptibles de réticuler tel que des groupes isocyanates au sein même de la chaîne du polymère) ou étant mélangé à un agent réticulant (représentant par exemple de l'ordre de 2 à 50% en poids du mélange polyuréthanne/agent réticulant) tel qu'un polyisocyanate ou un polycarbodiimide, ces fonctions réticulantes étant éventuellement bloquées par un agent bloquant (pouvant être par exemple débloqué par traitement thermique) tel que le caprolactam ou la butanone oxime.

Le cas échéant, on peut utiliser plusieurs agents collants (en particulier polyuréthannes) différents ou un même agent collant remplissant plusieurs fonctions, par exemple on peut utiliser au moins un agent collant favorisant notamment l'obtention de bonnes propriétés mécaniques (et/ou permettant le cas échéant le maintien de l'additif, et éventuellement des autres composants, sur le fil, comme vu précédemment), et éventuellement au moins un autre agent collant apte à assurer la protection et/ou facilitant la mise en oeuvre du fil de renfort.

La composition (en particulier d'ensimage) selon l'invention peut enfin comprendre au moins un autre agent usuel (généralement jusqu'à 20% en poids de son extrait sec), cet agent étant par exemple choisi parmi les lubrifiants (par exemple un ester d'alcool gras éthoxylé), les émulsifiants ou tensioactifs (par exemple l'alcool stéarylique à 20 moles d'oxyde d'éthylène), les antistatiques, les antimousses, les agents mouillants, les agents textiles, etc.

Comme déjà évoqué, la composition comprend généralement au moins un solvant, notamment l'eau. Le cas échéant, certains composants actifs peuvent déjà être en solution ou dispersion dans un solvant lors de leur ajout au mélange devant former la composition, et/ou le ou les solvants peuvent être ajoutés au mélange après les composants actifs afin d'obtenir la viscosité et les proportions habituellement requises pour le dépôt sur les filaments.

Une composition d'ensimage préférée selon l'invention présente par exemple la formulation suivante :

| Ingrédients | % en poids de l'extrait sec de la composition |
|---|---|
| Agent(s) de couplage organosilane(s) | 1-50 |
| Agent(s) collant(s) polyuréthanne(s) | 10-90 |
| KNO₃ | 1-60 |
| Lubrifiant(s) | 0-20 |

La présente invention porte également sur des fils de renforcement (avantageusement des fils de verre) revêtus de la précédente composition, lesdits fils pouvant se présenter sous différentes formes telles que fils continus, fils coupés, tresses, rubans, mats, etc.

Le taux de composition déposée (ou perte au feu) est avantageusement de 0,1 à 3% en poids, de préférence de 0,2 à 1,5% en poids, des fils.

La composition selon l'invention peut être déposée en une ou plusieurs étapes sur des filaments (devant former les fils) et/ou sur les fils de renfort. Les composites obtenus à partir des fils comprennent généralement au moins une matière organique et des fils de renfort, une partie au moins des fils de renfort étant les fils selon l'invention.

La présente invention porte également sur un procédé de fabrication de fils de verre revêtus de la composition selon l'invention, selon lequel on étire (à des vitesses de plusieurs mètres à dizaines de mètres par seconde) une multiplicité de filets de verre fondu, s'écoulant d'une multiplicité d'orifices disposés à la base d'une ou plusieurs filières, sous la forme d'une ou plusieurs nappes de filaments continus (de diamètre généralement compris entre 5 et 24 µm), puis on rassemble les filaments en un ou plusieurs fils que l'on collecte sur un support en mouvement, ledit procédé consistant à déposer à la surface des filaments en cours d'étirage et avant rassemblement des filaments en fils au moins une partie de la composition d'ensimage selon l'invention, le(s) fil(s) étant le cas échéant revêtus de la composition complète au plus tard lors de la collecte du (des) fil(s).

Les fils peuvent être collectés de différentes manières ; en particulier, ils peuvent être coupés, soit, après formation, par l'organe servant à les étirer, soit dans une opération ultérieure, ou bien ils peuvent être bobinés sur des supports en rotation (pour former des enroulements tels que des stratifils ou rovings, des cops, des gâteaux, etc), ou encore être répartis sur des convoyeurs en mouvement (pour former par exemple des mats ou des voiles). Le cas échéant les fils peuvent être séchés (par exemple par rayonnement infra-rouge, air chaud, haute fréquence, etc.), l'eau pouvant nuire à la bonne adhérence entre les fils et les matières à renforcer, et/ou ils peuvent être traités thermiquement (à des températures pouvant aller par exemple jusqu'à 200°C) de façon à permettre le cas échéant la polymérisation et/ou la réticulation de tout ou partie de l'ensimage.

A noter que par " fils de verre " dans la présente invention, on entend des fils à base de verre, c'est-à-dire non seulement des fils formés uniquement de filaments de verre mais également des fils formés de filaments de verre et de filaments organiques, notamment de filaments thermoplastiques. Dans ce dernier cas, pendant l'étirage des filaments de verre, on extrude et on entraîne simultanément les filaments organiques (ou on amène simultanément les fils organiques issus par exemple d'enroulements), les trajets suivis par les filaments de verre et les filaments (ou fils) organiques convergeant l'un vers l'autre avant que lesdits filaments soient rassemblés en au moins un fil composite entraîné mécaniquement.

La présente invention a également pour objet un composite comprenant au moins une matière organique et au moins des fils tels que définis précédemment.

La matière organique est avantageusement une matière thermoplastique, choisie notamment parmi les polyamides, les polyesters thermoplastiques tels que le polytéréphtalate de butylène (PBT) ou le polytéréphtalate d'éthylène (PET), les polyoléfines, les polyacétals, les polycarbonates, etc.

La composition de matrice moulable utilisée pour obtenir le composite par moulage peut renfermer également (outre la matière à renforcer et les fils de renfort) au moins un agent retardateur de flamme (par exemple un cyanurate, comme le cyanurate de mélamine et/ou un agent organophosphoré, comme le pyrophosphate de mélamine), et/ou peut renfermer notamment des charges permettant une meilleure résistance mécanique et/ou stabilisation dimensionnelle du composite (par exemple des charges minérales de type mica, talc, etc.).

Une composition de matrice moulable selon l'invention peut avantageusement présenter la formulation suivante :
- de 20 à 95% en poids de matière(s) organique(s);
- de 1 à 60 %, notamment de 5 à 40%, et de préférence de 10 à 30%, en poids d'au moins un agent retardateur de flamme ;
- de 1 à 60 % en poids, et de préférence de 10 à 40% en poids, de fils ensimés selon l'invention ; et
- de 0 à 50% en poids de charges inorganiques/minérales.

L'exemple suivant illustre la présente invention sans toutefois en limiter la portée :
On prépare une composition d'ensimage ayant la formulation ci-après en mélangeant dans l'eau ses différents ingrédients.

| Ingrédient | % en poids de l'extrait sec de la composition |
|---|---|
| Aminosilane commercialisé par la Société « GE Silicone » sous la dénomination « A 1100 | 10 |
| Polyuréthanne, avec agent réticulant, commercialisé par la Société « Bayer» sous la dénomination « Baybond PU130 » , (introduit sous forme de dispersion aqueuse à 30 % en poids d'extrait sec) | 67 |
| KNO₃ | 20 |
| Alcool stéarylique à 20 moles d'oxyde d'éthylène | 3 |

On fabrique un ou plusieurs fils de verre par étirage de filaments de verre fondu à partir d'une filière, l'ensimage de composition ci-dessus étant déposé avant le regroupement des filaments en fils.

Le ou les fils obtenus sont ensuite directement coupés sous filière, puis on prépare une composition moulable ayant la formulation suivante :

| Ingrédient | % en poids |
|---|---|
| Matrice composée de polyamide 6 (Ultramid B3 commercialisé par BASF) | 50 |
| Agent retardateur de flamme pyrophosphate de mélamine (commercialisé par Buddenheim sous le nom Budit 311 MPP) | 25 |
| Fils ensimés coupés | 25 |

Une pièce moulée composite est ensuite obtenue à partir de la composition moulable précédente par moulage par extrusion puis injection.

On effectue ensuite chacun des tests suivants : test LOI (selon la norme ISO 4589-2/1996F), test Epiradiateur (selon la norme NFP 92-505) et test du Cône Calorimètre (selon la norme ASTM E1354). L'essai est effectué sur des éprouvettes réalisées selon le présent exemple (résultats « fibre (KNO₃) » ci-dessous) et sur des éprouvettes comparatives obtenues en remplaçant les fils selon le présent exemple par des fils ayant été ensimés par la même composition mais sans KNO₃ (résultats « fibres réf » ci-dessous). Les résultats sont indiqués dans le tableau suivant.

| Test | | Fibre réf. | Fibre (KNO₃) |
|---|---|---|---|
| Indice limite Oxygène ISO 4589-2/1996F | (%) | 25.6 | 28.2 |
| Epiradiateur NF P92-505 | Temps Ignition (s) | 30 | 170 |
| | Temps moyen inflammation (s) | 41 | 18 |
| Cône Calorimètre ASTM E1354 | Pic HRR (KW/m2) | 306 | 203 |

Le test LOI consiste à déterminer la concentration d'oxygène dans un mélange oxygène/azote qui permet de maintenir la combustion d'une matière pendant une durée donnée (180 secondes) ou sur une longueur donnée (50mm). Les résultats de ce test montrent qu'il est plus difficile de maintenir la combustion dans le cas des produits selon l'invention. De même dans le cas du test Epiradiateur, il apparaît clairement qu'il faut beaucoup plus de temps pour enflammer les produits selon l'invention et que ceux-ci s'éteignent bien plus rapidement. Enfin le test du cône calorimètre montre que l'énergie libérée par la combustion est bien plus faible dans le cas des produits selon l'invention.

On note de plus dans le tableau suivant que ces améliorations ne se font pas au détriment des propriétés mécaniques des composites, les valeurs de résistance mécanique obtenues étant du même ordre que l'on utilise les fils de l'exemple ou les fils comparatifs (valeurs de résistance à la traction obtenues selon la norme ISO 527-2 et valeurs de résistance au choc Charpy selon la norme ISO 179-1).

| | Fibre réf | Fibre (KNO₃) |
|---|---|---|
| Contrainte Traction (Mpa) | 149.4 | 150.1 |
| Choc Charpy (KJ/m2) | 78.6 | 78.4 |

Les fils de renfort et produits composites réalisés selon l'invention peuvent servir dans diverses applications, par exemple dans la connectique, dans la fabrication de boîtiers électriques et électroniques, etc.

## Revendications

1. Fils de renfort revêtus par une composition d'ensimage, **caractérisée en ce que** la composition d'ensimage comprend :
un agent de couplage, choisi notamment parmi les silanes tels que les aminosilanes ou les époxysilanes, et
au moins un additif apte à agir à l'interface matrice/fils pour améliorer la résistance au feu du composite, le ou les additifs aptes à modifier l'interface matrice/fils étant choisis parmi :
les nitrates, tels que le nitrate de potassium (KNO₃), ou le nitrate de guanidine ;
un alcool choisi parmi le dipentaérythritol, le tripentaérythritol, le pentaérythritol éthoxylé, le pentaérythritol propoxylé, le pentaérythritol éthoxylé/propoxylé, ou le sorbitol (ou D-glucitol)
les dérivés du phosphore ou de l'acide phosphorique, les organophosphorés, les phosphates d'ester cyclique ou les organophosphinates, tels que le polyphosphate d'ammonium, le phosphate de guanidine, le 1,2,3 dioxaphosphorinane, ou le pyrophosphate d'ammonium.

2. Fils de renfort selon la revendication 1, **caractérisée en ce que** la composition d'ensimage est exempte de phosphore rouge, d'oxyde d'antimoine et de composés halogénés.

3. Fils de renfort selon l'une des revendications 1 ou 2, **caractérisée en ce que** la composition d'ensimage contient au moins un agent collant choisi parmi les polyuréthanes, les époxy, les copolymères acryliques, le poly(acétate de vinyle) et les émulsions polyoléfiniques.

4. Fils de renfort selon l'une des revendications 1 à 3, **caractérisée en ce que** la composition d'ensimage comprend au moins un agent collant, tel qu'un polyuréthanne, apte à fixer l'additif à la surface du fil pour qu'il reste à l'interface fil/matrice.

5. Fils de renfort selon l'une des revendications 1 à 4, **caractérisée en ce que** la composition d'ensimage comprend au moins deux agents collants polyuréthanes différents.

6. Fils de renfort selon l'une des revendications 1 à 5, **caractérisée en ce que** la composition d'ensimage représente la formulation suivante :
| Ingrédients | % en poids de l'extrait sec de la composition |
|---|---|
| Organosilane(s) | 1-50 |
| Polyuréthanne(s) | 10-90 |
| KNO₃ | 1-60 |
| Lubrifiant(s) | 0-20 |

7. Procédé de fabrication de fils de verre selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fil(s) au moins une partie d'une composition d'ensimage, le(s) fil(s) étant le cas échéant revêtus de la composition complète au plus tard lors de la collecte du (des) fil(s),
**caractérisé en ce que** la composition d'ensimage comprend un agent de couplage, choisi notamment parmi les silanes tels que les aminosilanes ou les époxysilanes et au moins un additif apte à agir à l'interface matrice/fils pour améliorer la résistance au feu du composite, le ou les additifs aptes à modifier l'interface matrice/fils étant choisis parmi :
les nitrates, tels que le nitrate de potassium (KNO₃), ou le nitrate de guanidine ;
un alcool choisi parmi le dipentaérythritol, le tripentaérythritol, le pentaérythritol éthoxylé, le pentaérythritol propoxylé, le pentaérythritol éthoxylé/propoxylé, ou le sorbitol (ou D-glucitol)
les dérivés du phosphore ou de l'acide phosphorique, les organophosphorés, les phosphates d'ester cyclique ou les organophosphinates, tels que le polyphosphate d'ammonium, le phosphate de guanidine, le 1,2,3 dioxaphosphorinane, ou le pyrophosphate d'ammonium.

8. Procédé selon la revendication 7, **caractérisée en ce que** la composition d'ensimage est exempte de phosphore rouge, d'oxyde d'antimoine et de composés halogénés.

9. Procédé selon l'une des revendications 7 ou 8, **caractérisée en ce que** la composition d'ensimage contient au moins un agent collant choisi parmi les polyuréthanes, les époxy, les copolymères acryliques, le poly(acétate de vinyle) et les émulsions polyoléfiniques.

10. Procédé selon l'une des revendications 7 à 9, **caractérisée en ce que** la composition d'ensimage comprend au moins un agent collant, tel qu'un polyuréthanne, apte à fixer l'additif à la surface du fil pour qu'il reste à l'interface fil/matrice.

11. Procédé selon l'une des revendications 7 à 10, **caractérisée en ce que** la composition d'ensimage comprend au moins deux agents collants polyuréthanes différents.

12. Procédé selon l'une des revendications 7 à 11, **caractérisée en ce que** la composition d'ensimage représente la formulation suivante :
| Ingrédients | % en poids de l'extrait sec de la composition |
|---|---|
| Organosilane(s) | 1-50 |
| Polyuréthanne(s) | 10-90 |
| KNO₃ | 1-60 |
| Lubrifiant(s) | 0-20 |

13. Composition moulable comprenant au moins des fils tels que définis selon l'une des revendications 1 à 6.

14. Composition moulable selon la revendication 13, **caractérisée en ce qu'**elle renferme également au moins un agent retardateur de flamme et/ou au moins des charges.

15. Composition moulable selon l'une des revendications 13 ou 14, **caractérisée en ce qu'**elle présente la formulation suivante:
- de 20 à 95% en poids de matière(s) organique(s) ;
- de 1 à 60%, notamment de 5 à 40%, et de préférence de 10 à 30%, en poids d'au moins un agent retardateur de flamme ;
- de 1 à 60% en poids, et de préférence de 10 à 40% en poids, de fils ensimés selon l'invention ; et
- de 0 à 50% en poids de charges inorganiques/minérales.

## Claims

1. Reinforcing strands coated with a size composition, **characterized in that** the size composition includes:
a coupling agent, chosen in particular from silanes such as aminosilanes or epoxysilanes, and
at least one additive capable of acting at the strands/matrix interface in order to improve the fire resistance of the composite, the additive or additives capable of modifying the strands/matrix interface being chosen from:
nitrates, such as potassium nitrate (KNO₃) or guanidine nitrate;
an alcohol chosen from dipentaerythritol, tripentaerythritol, ethoxylated pentaerythritol, propoxylated pentaerythritol, ethoxylated/propoxylated pentaerythritol, or sorbitol (or D-glucitol);
and phosphorus derivatives or phosphoric acid derivatives, organophosphorous compounds, cyclic ester phosphates or organophosphinates, such as ammonium polyphosphate, guanidine phosphate, 1,2,3-dioxaphosphorinane, or ammonium pyrophosphate.

2. Reinforcing strands according to claim 1, **characterized in that** the size composition contains no red phosphorus, no antimony oxide nor halogenated compounds.

3. Reinforcing strands according to claim 1 or claim 2, **characterized in that** the size composition contains at least one bonding agent chosen from polyurethanes, epoxies, acrylic copolymers, polyvinyl acetate and polyolefin emulsions.

4. Reinforcing strands according to any one of claims 1 to 3, **characterized in that** the size composition includes at least one bonding agent, such as a polyurethane, capable of fixing the additive to the surface of the strands so that it remains at the strands/matrix interface.

5. Reinforcing strands according to any one of claims 1 to 4, **characterized in that** the size composition includes at least two different polyurethane bonding agents.

6. Reinforcing strands according to any one of claims 1 to 5, **characterized in that** the size composition has the following formulation:
| Ingredients | wt. % of the solids content of the composition |
|---|---|
| Organosilane(s) | 1-50 |
| Polyurethane(s) | 10-90 |
| KNO₃ | 1-60 |
| Lubricant(s) | 0-20 |

7. Process for manufacturing glass strands in which a multiplicity of molten glass strands, flowing out of a multiplicity of orifices located at the base of one or more dies, are drawn in the form of one or more sheets of continuous filaments and then the filaments are assembled into one or more strands that are collected on a moving support, said process consisting in depositing, on the surface of the filaments while they are being drawn and before the filaments are assembled into one or more strands, at least some of a size composition, the strand(s) being, if need be, coated with the complete composition at the latest during collection of the strand(s),
**characterized in that** the size composition includes a coupling agent, chosen in particular from silanes such as aminosilanes or epoxysilanes, and at least one additive capable of acting at the strands/matrix interface in order to improve the fire resistance of the composite, the additive or additives capable of modifying the strands/matrix interface being chosen from:
nitrates, such as potassium nitrate (KNO₃) or guanidine nitrate;
an alcohol chosen from dipentaerythritol, tripentaerythritol, ethoxylated pentaerythritol, propoxylated pentaerythritol, ethoxylated/propoxylated pentaerythritol, or sorbitol (or D-glucitol);
and phosphorus derivatives or phosphoric acid derivatives, organophosphorous compounds, cyclic ester phosphates or organophosphinates, such as ammonium polyphosphate, guanidine phosphate, 1,2,3-dioxaphosphorinane, or ammonium pyrophosphate.

8. Process according to claim 7, **characterized in that** the size composition contains no red phosphorus, no antimony oxide nor halogenated compounds.

9. Process according to claim 7 or claim 8, **characterized in that** the size composition contains at least one bonding agent chosen from polyurethanes, epoxies, acrylic copolymers, polyvinyl acetate and polyolefin emulsions.

10. Process according to any one of claims 7 to 9, **characterized in that** the size composition includes at least one bonding agent, such as a polyurethane, capable of fixing the additive to the surface of the strands so that it remains at the strands/matrix interface.

11. Process according to any one of claims 7 to 10, **characterized in that** the size composition includes at least two different polyurethane bonding agents.

12. Process according to any one of claims 7 to 11, **characterized in that** the size composition has the following formulation:
| Ingredients | wt. % of the solids content of the composition |
|---|---|
| Organosilane(s) | 1-50 |
| Polyurethane(s) | 10-90 |
| KNO₃ | 1-60 |
| Lubricant(s) | 0-20 |

13. Mouldable composition, comprising at least strands as defined according to any one of claims 1 to 6.

14. Mouldable composition according to claim 13, **characterized in that** it also contains at least one flame-retarding agent and/or at least fillers.

15. Mouldable composition according to claim 13 or claim 14, **characterized in that** it has the following formulation:
- 20 to 95% by weight of organic material(s);
- 1 to 60%, especially 5 to 40% and preferably 10 to 30% by weight of at least one flame-retarding agent;
- 1 to 60% by weight, and preferably 10 to 40% by weight of sized strands according to the invention; and
- 0 to 50% by weight of inorganic/mineral fillers.

## Patentansprüche

1. Verstärkungsfäden, die mit einer Schlichtezusammensetzung überzogen sind, **dadurch gekennzeichnet, daß** die Schlichtezusammensetzung umfaßt:
ein Kopplungsmittel, das insbesondere aus den Silanen, wie Aminosilanen oder Epoxysilanen ausgewählt ist, und
wenigstens einen Zusatzstoff, der geeignet ist, auf die Matrix/Faden-Schnittstelle zu wirken, um die Feuerbeständigkeit des Verbundwerkstoffes zu verbessern, wobei der oder die Zusatzstoffe, die geeignet sind, die Matrix/Faden-Schnittstelle zu verändern, ausgewählt sind aus:
den Nitraten, wie Kaliumnitrat (KNO₃) oder Guanidinnitrat,
einem Alkohol ausgewählt aus Dipentaerythritol, Tripentaerythritol,
ethoxyliertem Pentaerythritol, propoxyliertem Pentaerythritol, ethoxyliertem/propoxyliertem Pentaerythritol, oder Sorbitol (oder D-Glucitol),
den Derivaten des Phosphor oder der Phosphorsäure, den organischen Phosphorverbindungen, den Phosphaten eines cyclischen Esters oder den Organophosphinaten, wie Ammoniumpolyphosphat, Guanidinphosphat, 1,2,3-Dioxaphosphorinan, oder Ammoniumpyrophosphat.

2. Verstärkungsfäden nach Anspruch 1, **dadurch gekennzeichnet, daß** die Schlichtezusammensetzung frei von rotem Phosphor, von Antimonoxid und von Halogenverbindungen ist.

3. Verstärkungsfäden nach einem der Ansprüche 1 oder 2, **dadurch gekennzeichnet, daß** die Schlichtezusammensetzung wenigstens ein Klebemittel enthält, das aus den Polyurethanen, den Epoxidharzen, den Acrylcopolymeren, Polyvinylacetat und den Polyolefinemulsionen ausgewählt ist.

4. Verstärkungsfäden nach einem der Ansprüche 1 bis 3, **dadurch gekennzeichnet, daß** die Schlichtezusammensetzung wenigstens ein Klebemittel, wie ein Polyurethan umfaßt, das geeignet ist, den Zusatzstoff auf der Oberfläche des Fadens zu fixieren, damit er an der Faden/Matrix-Schnittstelle bleibt.

5. Verstärkungsfäden nach einem der Ansprüche 1 bis 4, **dadurch gekennzeichnet, daß** die Schlichtezusammensetzung wenigstens zwei unterschiedliche Polyurethan-Klebemittel umfaßt.

6. Verstärkungsfäden nach einem der Ansprüche 1 bis 5, **dadurch gekennzeichnet, daß** die Schlichtezusammensetzung die folgende Formulierung aufweist:
| Bestandteile | Gew.-% des Trockenextraktes der Zusammensetzung |
|---|---|
| Organosilan(e) | 1 - 50 |
| Polyurethan(e) | 10 - 90 |
| KNO₃ | 1 - 60 |
| Schmiermittel | 0 - 20 |

7. Verfahren zur Herstellung von Glasfäden, wonach eine Vielzahl von Strahlen von geschmolzenem Glas, die aus einer Vielzahl von an der Basis von einer oder mehreren Düsen angeordneten Öffnungen fließen, in Form von einer oder mehreren Lagen aus Endlosfilamenten gezogen werden, anschließend die Filamente zu einem oder mehreren Fäden zusammengeführt werden, die auf einem in Bewegung befindlichem Träger gesammelt werden, wobei das Verfahren darin besteht, während des Ziehvorgangs und vor dem Zusammenführen der Filamente zu einem Faden (zu Fäden) wenigstens einen Teil einer Schlichtezusammensetzung auf die Oberfläche der Filamente aufzubringen, wobei der (die) Faden (Fäden) gegebenenfalls spätestens während des Sammelns des Fadens (der Fäden) mit der kompletten Zusammensetzung überzogen wird (werden),
**dadurch gekennzeichnet, daß** die Schlichtezusammensetzung ein Kopplungsmittel, das insbesondere aus den Silanen, wie Aminosilanen oder Epoxysilanen ausgewählt ist, sowie wenigstens einen Zusatzstoff umfaßt, der geeignet ist, auf die Matrix/Faden-Schnittstelle zu wirken, um die Feuerbeständigkeit des Verbundwerkstoffes zu verbessern, wobei der oder die Zusatzstoffe, die geeignet sind, die Matrix/Faden-Schnittstelle zu verändern, ausgewählt sind aus:
den Nitraten, wie Kaliumnitrat (KNO₃) oder Guanidinnitrat,
einem Alkohol ausgewählt aus Dipentaerythritol, Tripentaerythritol, ethoxyliertem Pentaerythritol, propoxyliertem Pentaerythritol, ethoxyliertem/propoxyliertem Pentaerythritol, oder Sorbitol (oder D-Glucitol),
den Derivaten des Phosphor oder der Phosphorsäure, den organischen Phosphorverbindungen, den Phosphaten eines cyclischen Esters oder den Organophosphinaten, wie Ammoniumpolyphosphat, Guanidinphosphat, 1,2,3-Dioxaphosphorinan, oder Ammoniumpyrophosphat.

8. Verfahren nach Anspruch 7, **dadurch gekennzeichnet, daß** die Schlichtezusammensetzung frei von rotem Phosphor, von Antimonoxid und von Halogenverbindungen ist.

9. Verfahren nach einem der Ansprüche 7 oder 8, **dadurch gekennzeichnet, daß** die Schlichtezusammensetzung wenigstens ein Klebemittel enthält, das aus den Polyurethanen, den Epoxidharzen, den Acrylcopolymeren, Polyvinylacetat und den Polyolefinemulsionen ausgewählt ist.

10. Verfahren nach einem der Ansprüche 7 bis 9, **dadurch gekennzeichnet, daß** die Schlichtezusammensetzung wenigstens ein Klebemittel, wie ein Polyurethan umfaßt, das geeignet ist, den Zusatzstoff auf der Oberfläche des Fadens zu fixieren, damit er an der Faden/Matrix-Schnittstelle bleibt.

11. Verfahren nach einem der Ansprüche 7 bis 10, **dadurch gekennzeichnet, daß** die Schlichtezusammensetzung wenigstens zwei unterschiedliche Polyurethan-Klebemittel umfaßt.

12. Verfahren nach einem der Ansprüche 7 bis 11, **dadurch gekennzeichnet, daß** die Schlichtezusammensetzung die folgende Formulierung aufweist:
| Bestandteile | Gew.-% des Trockenextraktes der Zusammensetzung |
|---|---|
| Organosilan(e) | 1 - 50 |
| Polyurethan(e) | 10 - 90 |
| KNO₃ | 1 - 60 |
| Schmiermittel | 0 - 20 |

13. Formbare Zusammensetzung, umfassend wenigstens Fäden wie sie nach einem der Ansprüche 1 bis 6 definiert sind.

14. Formbare Zusammensetzung nach Anspruch 13, **dadurch gekennzeichnet, daß** sie auch wenigstens ein Flammschutzmittel und/oder wenigstens Füllstoffe enthält.

15. Formbare Zusammensetzung nach einem der Ansprüche 13 oder 14, **dadurch gekennzeichnet, daß** sie die folgende Formulierung aufweist:
- 20 bis 95 Gew.-% organische(s) Material(ien),
- 1 bis 60 Gew.-%, insbesondere 5 bis 40 Gew.-% und vorzugsweise 10 bis 30 Gew.-% wenigstens eines Flammschutzmittels,
- 1 bis 60 Gew.-% und vorzugsweise 10 bis 40 Gew.-% erfindungsgemäß geschlichtete Fäden und
- 0 bis 50 Gew.-% anorganische/mineralische Füllstoffe.
